Europäisches Patentamt

European Patent Office

Office européen des brevets

(11) Publication number: **0 092 897**
**B1**

(12) **EUROPEAN PATENT SPECIFICATION**

(45) Date of publication of patent specification: **04.04.90**

(51) Int. Cl.⁵: **C 08 L 23/04, B 32 B 27/32, C 08 J 5/18, B 65 D 75/00**

(21) Application number: **83300831.1**

(22) Date of filing: **18.02.83**

(60) Divisional application 89114332.3 filed on **18/02/83.**

(54) Polymeric composition of matter, oriented polymeric films and shrink bags made therefrom.

(30) Priority: **26.04.82 US 371781**

(43) Date of publication of application:
**02.11.83 Bulletin 83/44**

(45) Publication of the grant of the patent:
**04.04.90 Bulletin 90/14**

(84) Designated Contracting States:
**AT BE CH DE FR GB IT LI LU NL SE**

(56) References cited:
**EP-A-0 032 027**
**EP-A-0 051 480**
**GB-A-1 146 647**
**GB-A-2 018 676**
**GB-A-2 097 324**
**GB-A-2 115 348**
**US-A-4 161 562**

(73) Proprietor: **AMERICAN NATIONAL CAN COMPANY**
**8101 West Higgins Road**
**Chicago Illinois 60631 (US)**

(72) Inventor: **Newsome, David L.**
**Brunel 29**
**NL-1422 RH Uithoorn (NL)**

(74) Representative: **Holdcroft, James Gerald, Dr. et al**
**Graham Watt & Co. Riverhead**
**Sevenoaks Kent TN13 2BN (GB)**

Courier Press, Leamington Spa, England.

## Description

The present invention relates to oriented polymeric films and shrink bags made therefrom.

Heat shrinkable polymer films have gained substantial acceptance for such uses as the packaging of meats. This description will for convenience refer to the film packaging of meat, but it is to be understood that films according to the invention are also suitable for packaging other products. Some films embodying this invention will normally be formed as heat shrinkable bags and supplied to the meat packer with one open end. They are to be closed and sealed after insertion of the meat. After the product is inserted, air will normally be evacuated, the open end of the bag closed, for instance by heat sealing or by applying a metal clip, and finally heat is applied, such as by hot water, to initiate shrinkage of the film about the meat.

In subsequent processing of the meat, the bag may be opened and the meat removed for further cutting of the meat into user cuts, for retail sale, for example, or for institutional use.

Successful shrink bags must satisfy a multiplicity of requirements imposed by both the bag producer and the bag user. Of primary importance to the bag user is the capability of the bag physically to survive intact the process of being filled, evacuated, sealed closed, and heat shrunk. The bag must also be strong enough to survive the handling involved in moving the packaged meat, which may weigh 100 pounds (45 kg) or more, along the distribution system to the next processor, or to the user. Thus, the bag must physically protect the meat.

It is also highly desirable to the bag user that the bag serve as a barrier against infusion of gaseous matter from the surrounding environment. Of particular importance is the exclusion of oxygen, since oxygen is well known to affect meat deleteriously.

The bag producer requires a product which can be produced competitively while meeting the performance requirements of the user. Thus the bag material should be readily extrudable, and susceptible to orientation, with sufficient leeway in process parameters as to allow for efficient film production. The process should also be susceptible of efficient extended production operations. In the orientation process, the film must be tough enough to withstand the necessary stretching. The orientation temperature should be a temperature which can be economically achieved by the producer, and which provides for use of economical shrink processes by the bag user.

Conventional shrink bags have generally been constructed with ethylene vinyl acetate copolymers (EVA). In some cases the bags contain a layer of a Saran (Registered Trade Mark) copolymer to serve as an oxygen barrier. Ethylene vinyl alcohol copolymer (EVOH) has also been suggested as the barrier layer.

Notwithstanding the advantages, shrink-bag packaging of meat is not without its difficulties, many of which are attributable to limitations in the film. As will be appreciated, the processes of stretching the film, and later shrinking it, expose the film to rather severe conditions, due to the nature of the operations.

It is especially important to appreciate that the film is particularly vulnerable to failure due to the relatively high temperatures to which it is exposed in the orientation and shrinking processes.

The film must be susceptible of orientation without distortion, or separation of the layers which are normally present in films of this nature. The film must be strong enough at the orientation temperature, to withstand the stretching without the creation of holes or tears, and must not develop non-uniform zones of stretching.

In the case of blown tubular film, the film must be capable of supporting the stretching bubble during the orientation process. Finally, each one of the layers of a multilayer film should be susceptible of orientation without fracture, separation, or creation of holes therein.

In the packaging phase, the film must respond to heat rapidly enough for commercial practicality, and yet must not exhibit such a level of shrinkage as would cause the film to pull apart or delaminate under its own internal shrinkage forces. Shrink-related problems are seriously aggravated when a cut of meat includes protruding bones and/or significant cavities in its surface.

Where there are cavities in the meat, such as around the interior of a rib section, the redistribution of an area of the film adjacent the cavity places especially severe strains on the ability of the film to conform to the meat in the shrinkage process while maintaining film continuity. All too commonly, the film may develop holes in the cavity area, thus breaching the physical and chemical protection which the packaging film should provide for the contained product.

An object of this invention is to provide improved polymeric material and film structures for use in shrink bags well able to withstand production and shrink processes, so that bags made therefrom can withstand the shrink processes intact, especially when a packaged item such as meat, has a large cavity in a surface thereof.

The present invention starts from EP—A—0,032,027 which discloses a central barrier layer having two blend layers, composed of linear low density polyethylene (LLDPE) and ethylene vinyl acetate (EVA) disposed one to either side of the barrier layer. Structures of this kind as disclosed in EP—A—0,032,027 have five or more layers: layers of adhesive are interposed between the barrier layer and the blend layers. In contrast, according to the invention, no such adhesive layers are present in the structure.

EP—A—0,051,480, which was not published until after the Applicants' effective filing date likewise discloses similar five layer structures. A comparative example (No. 3) in EP—A—0,051,480 discloses a three layer structure consisting of a barrier layer located betwen two blend layers each composed of LLDPE and EVA. The blend layers have, however, different compositions in that one is 30% LLDPE and 70% EVA while the other is 20% LLDPE and 80% EVA.

In view of EP—A—0,051,480 we hereby disclaim protection for a three layer structure in accordance with the aforesaid comparative example (3).

Therefore, according to one aspect of the invention there is provided an oriented multiple layer polymeric film, consisting of a barrier layer and two blend layers composed of linear low density polyethylene (LLDPE) and ethylene vinyl acetate copolymer (EVA) disposed one to either side of the first layer, and the blend layers have the same composition which consists of 10% to less than 30% or more than 30% to 90% LLDPE and the balance is EVA, the percentages quoted being by weight.

Also according to this aspect of the present invention, there is provided an oriented multiple layer polymeric film, consisting of a barrier layer and two blend layers composed of LLDPE and EVA disposed one to either side of the barrier layer, and one blend layer consists of 10% to less than 30% or more than 30% to 90% LLDPE the balance being EVA, and the other blend layer consists of 10% to less than 20% or more than 20% to 90% LLDPE the balance being EVA, the percentages quoted being by weight.

Multiple layer polymeric films can be made from more than three layers, for instance from five layers. LLDPE is an essential component of the structure and is present in one or more layers formed as a blend containing the LLDPE, but may also be present as a separate layer or layers composed entirely of LLDPE.

Insofar as concerns five-layer structures the present invention starts from EP—A—0,032,027 which, as aforesaid, discloses a five-layer structure having two outermost olefin layers which may be blend layers made from mixtures of LLDPE and EVA comprising at least 20% by weight of the former and not more than 80% of the later. A single specific example has two 50:50 blend layers of LLDPE and EVA each joined to a barrier layer by a respective EVA adhesive layer.

The aforesaid, unpublished EP—A—0,051,480 discloses a plurality of five-layer structures comprising outer layers of LLDPE blended with EVA in various proportions, adhered to a barrier layer by respective adhesive layers, the blend layers comprising 20—70% LLDPE and 30—80% EVA. Also disclosed is a comparative example (No. 1) having two blend layers one comprising 10% LLDPE and 90% EVA and the other comprising LDPE (not LLDPE) and EVA.

We hereby disclaim protection for any five layer structure as specifically disclosed in the aforesaid European publications.

According to this aspect of the invention, there is provided an oriented multiple layer polymeric film, consisting of a first barrier layer having second and third layers each adhered to a respective one of the opposite surfaces of the first layer, and fourth and fifth layers respectively adhered to surfaces of the second and third layers not adhered to the first layer, the second and third layers each being a blend of LLDPE and EVA and each of the fourth and fifth layers being an EVA, the second and third layers having the same composition and being composed of 10 to less than 20% or more than 80 up to 90% LLDPE and the balance being EVA; the percentages quoted being by weight.

The invention also provides an oriented multiple layer polymeric film, consisting of a first barrier layer having second and third layers each adhering to a respective one of the opposite surfaces of the first layer, and fourth and fifth layers respectively adhered to surfaces of the second and third layers not adhered to the first layer, the second and third layers each being a blend of LLDPE and EVA and each of the fourth and fifth layers being an EVA, the second and third layers having different compositions, one of these layers being composed of 10 to less than 20% or more than 80 up to 90% LLDPE, the balance being EVA, and the other of these layers being composed of more than 10 up to 90% LLDPE, the balance being EVA; the percentages quoted being by weight.

In all the multiple layer films of the invention, the barrier layer is preferably either vinyl chloride-vinylidene chloride copolymer (Saran) or EVOH, or a polymeric blend containing EVOH.

In preferred films according to the invention the overall composition of the film is 20% to 30% LLDPE.

The invention comprehends heat sealable shrink bags for utilization particularly in packaging of meat, which may have bony projections or large cavities, wherein the bags are made from oriented films according to the invention.

Preferred embodiments of the invention will now be described by way of non-limiting examples in the following description, with reference to the accompanying drawings, in which:

Figure 1 is a plan view of a bag made according to the invention,

Figure 2 is a cross-section of the bag of Figure 1 taken on the line 2—2 of Figure 1,

Figure 3 is a cross-section similar to Figure 2, but showing a 5-layer bag structure instead of a 3-layer structure.

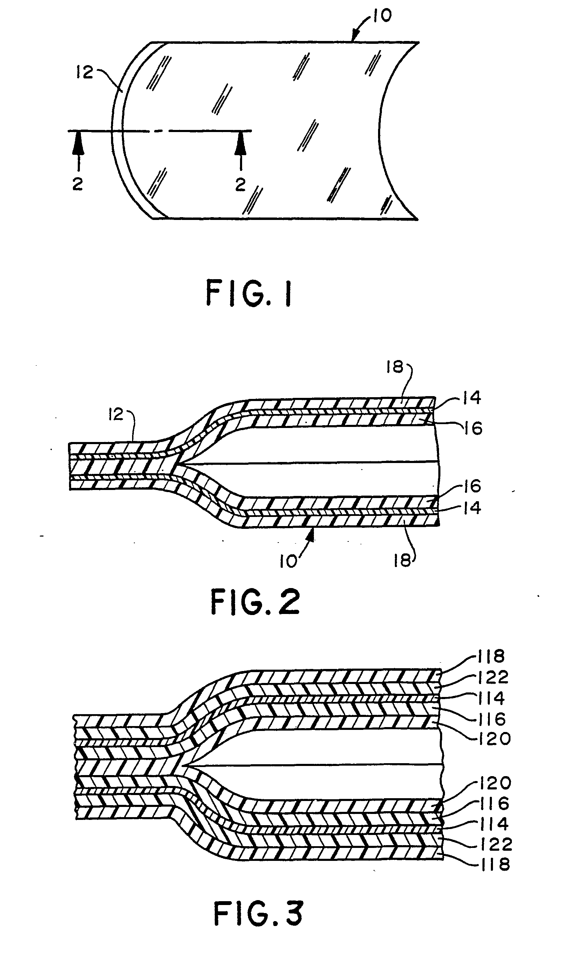

Figure 1 shows a bag 10 according to the invention. The empty bag shown is a collapsed, molecularly-oriented tube having a closing heat seal 12 across one end of the tube. The other end of the bag is left open for insertion of meat, and it is normally closed and sealed after the meat is put into the bag.

The cross-section of the bag in Figure 2 shows a typical structure where the bag is made from a three-layer coextruded plastics film. Layer 14 is a barrier layer which minimizes the transmission of oxygen through the film. Preferred barrier layer materials are Saran, EVOH, and blends of EVOH. Layer 16 is the heat seal layer. Layer 18 is the outer bag layer and serves a primary function of protecting the package and its product from physical abuse. In a three-layer film as in Figure 2, embodying the invention, layer 18 is a blend of 10 weight percent to 100 weight percent of an EVA and 90 weight percent to 0 weight percent

3

LLDPE. Layer 16 is 10% to 100% of an EVA and 0% to 90% LLDPE. Independent of the individual compositions of layers 16 and 18, either of which may be 100% EVA, one of the layers 16 and 18 must contain at least 10% LLDPE.

In engineering the specifications for a specific film according to the invention, one deals with the following independent variables: barrier layer composition and thickness, the specific EVA, the specific LLDPE, the ratio of EVA/LLDPE in the sealant layer 16 and the exterior layer 18 and the thicknesses of layers 16 and 18, and the overall thickness of the film.

The overall thickness of films of this invention is nominally the same as the thickness of conventional films. Films are generally about 2.0 mils (0.05 mm) thick with a normal range of 1.5 to 3.0 mils (0.038 to 0.076 mm). Films thinner than 1.5 mil (0.038 mm) tend to be too weak to perform all required functions. Films thicker than 3.0 mils (0.076) are unable to compete economically with thinner films.

LLDPE polymers suitable for use in this invention are those having a melt index (MI) of up to about 6. Preferred LLDPE polymers have an MI of 0.5 to 1.5. Among the preferred polymers are 2045 from Dow Chemical Company and 11P from DuPont Company.

As used herein, the term melt index refers to the physical property determination described in ASTM—D1238.

Preferred EVA's are those having 6% to 12% vinyl acetate (VA) content and a melt index less than 1. While blend amounts are quoted herein in terms of weight percent, VA contents are in mole percent. Especially preferred EVA's have VA contents of 7% to 9% and melt indices of 0.2 to 0.8.

The amount of LLDPE in the blend is selected to provide the best balance of properties which maximizes the desirable benefits of each of the elements of the blend. The EVA provides high levels of adhesion to the barrier layer when the barrier layer is Saran or certain EVOH blends. EVA's having greater than about 85% ethylene also provide substantial structural strength to the film during the orientation process, and are especially beneficial for the orientation of tubular films. The LLDPE is highly desired for its capability of surviving intact the processes involved in shrinking and, in general, the striking ability of shrink bags to withstand the shrinking process correlates directly with increasing LLDPE contents. In designing the bag, the desire to increase the LLDPE percentage to improve shrink performance is tempered, however, by the other demands on layers 16 and 18 which are better met by the EVA. Initial improvements in the film, compared to films having straight EVA in layers 16 and 18, are seen in films having as litle as 10% LLDPE in layers 16 and 18. Films having 20% to 30% LLDPE show marked improvements. Films having higher percentages of LLDPE, such as 50% to 90% have even better shrink performance, but are increasingly more difficult to stabilize in the manufacturing process. Films having 100% LLDPE in either layer 16 or 18 are physically possible but not preferred because of difficulties in manufacturing them.

The thickness of each layer of the present films is essentially the same as the corresponding layer in conventional shrink films. By way of example in a typical film used to make the bag of Figures 1 and 2, the overall film thickness is 2.25 mils (0.057 mm). Layers 14 and 18 are 0.4 mil (0.01 mm) and layer 16 is 1.45 mils (0.037 mm).

The barrier layer is preferably either Saran or EVOH (or a blend of polymers containing EVOH). Saran is a well known and well accepted barrier material. The use of LLDPE in the outer layers of three layer structures, where Saran is the barrier layer, provides to the user the benefit of up-grading a known packaging material. However, the benefits of using an EVOH or EVOH blend as the barrier material have been thoroughly researched and described. Combining an EVOH blend as the barrier layer 14 with LLDPEEVA blends in layer 16 and 18 provides a superior film. The EVA and EVOH blends contribute to facilitating manufacturing processability. The LLDPE contributes to strikingly improved shrink performance. The EVOH blend may, in addition, provide a superior oxygen barrier.

The films described herein are susceptible to being manufactured according to conventional orientation processes. In the following examples, a few films are described in detail as being manufactured using equipment common to the "double bubble" process. Other films of the invention, iterated in a later tabulation, may be made by this or other conventional processes. Choice of the desired process depends not only on the film composition and structure but also on specific properties desired; and thus these choices on any given film are a matter of engineering selection.

Examples 1—4

Example 1A is a control film having a core layer of Saran and outer layers of an EVA indentified as 3638, and having a melt-index of 0.4 and a VA content of 7.5%. The Saran and EVA were plasticated and melt extruded through three separate extruders into a three-layer die and formed into a three layer tubular film on conventional "double bubble" equipment. The resulting film was biaxially oriented, with a stretch factor of approximately 3/1 in the with-machine direction with respect to the cross-machine direction. The oriented film was 2.25 mils thick (0.057 mm); and was composed of: 1.45 mil (0.037 mm) sealant layer of 3638 EVA, 0.4 mil (0.01 mm) Saran barrier layer, and a 0.4 mil (0.01 mm) outer layer of 3638 EVA. Example 1B was the same as Example 1A except that 80232 EVA was used in place of 3638 EVA (control example).

Control Example 2 was the same as Example 1A except that a blend of EVA and LLDPE was substituted for the sealant layer. The outer and barrier layers were unchanged. For the sealant layer, 30 parts by weight of pellets of Dowlex 2045 LLDPE were dry blended with 70 parts by weight of pellets of 1060 EVA. The

4

**EP 0 092 897 B1**

blended composition, the 3638 EVA and Saran, were extruded through three extruders and oriented as in Example 1. The sealant layer, barrier layer, and outer layer of the resulting film had the same thickness as quoted above for Example 1.

In Example 3, a film was made having the same layer structure and dimensions as in Examples 1 and 2, with only the layer compositions being changed. The composition of the sealant layer and the outer layer were formed by dry blending as in Example 2, pellets of the respective polymers used. Both the sealant and outer layers were 30% by weight Dowlex 2045 LLDPE and 70% UE—657 EVA.

For Example 4, a film having the same layer structure and dimensions was made as in Example 3, with the outer and sealant layers being a blend of 30% 2045 LLDPE and 70% 80232 EVA.

Table 1 shows significant properties of the polymers recited above was well as the polymers mentioned in subsequent examples and structures.

TABLE 1
Polymer Properties

| Cited Polymer | Type of Polymer | Melt Index | % VA Content |
|---|---|---|---|
| LD 310.09 | EVA | 2.3 | 9.0 |
| NA 235 | EVA | 0.35 | 4.5 |
| NPE 490 | EVA | 0.5 | 8.0 |
| Plexar (1) | EVA, modified | 1.0 | 4.0 |
| UE 643 | EVA | 9.0 | 20 |
| UE 655 | EVA | 2.0 | 9.0 |
| UE 657 | EVA | 0.5 | 12 |
| 360 | EVA | 2.0 | 25 |
| 1060 | EVA | 0.5 | 7.5 |
| 3120 | EVA | 1.2 | 7.5 |
| 3121 | EVA | 0.5 | 7.5 |
| 3134 | EVA | 8.0 | 12 |
| 3135X | EVA | 0.35 | 12 |
| 3165 | EVA | 0.7 | 18 |
| 3638 | EVA | 0.4 | 7.5 |
| 80232 | EVA | 0.38 | 9.5 |
| 11P | LLDPE | 0.7 | — |
| 2035 | LLDPE | 6.0 | — |
| 2045 | LLDPE | 1 | — |

The films of Examples 1—4 were made into bags by cutting the tubular film into lengths and sealing one end by conventional heat sealing techniques. The resulting bags were subjected to shrink tests using a specially designed test block insert. The test block insert consisted of a rectangular wooden block of a size which approximated to the volume of meat normally placed in bags of the same size as the bags under test. The test block included on its surface a plurality of holes of uniform cross-section, the holes being nominally 3 inches across and $1\frac{1}{2}$ inches deep — the holes simulating the cavities encountered in some cuts of meat.

5

After the block was inserted into a given bag, the bag was evacuated and sealed closed. The sealed bag was then passed through a conventional hot water shrink process with water temperature controlled at 204°F. to 206°F (95 to 96°C). After the shrink process bags were evaluated for bag integrity, looking particularly for holes in or near the cavities. Bags having no holes were judged as passing the test. Bags having one or more holes were judged as failing the test. Table 2 shows the results of the tests for Examples 1—4.

TABLE 2
Shrink Test Results

| Example No. | No. of Bags Tested | Passed | Failed | Percent Passing |
|---|---|---|---|---|
| 1A (control) | 10 | 0 | 10 | 0% |
| 1B (control) | 5 | 0 | 5 | 0% |
| 2 (control) | 5 | 3 | 2 | 60% |
| 3 | 5 | 4 | 1 | 80% |
| 4 | 10 | 10 | 0 | 100% |

While Table 2 shows a range of degrees of improvement over the control films, all the films that contained LLDPE did show significantly improved performance as compared to the control film. Even Example 2, which had LLDPE only in the sealant layer showed a 60% pass rate compared to 0% for the control.

Three layer structures illustrative of the invention are:
/inner layer/barrier layer/outer layer/
/10% 2045—90% 3135x/Saran/10% 2045—90% 3135/
/40% 2045—60% UE657/Saran/40% 2045—60% UE657/
/50% 2045—50% UE657/Saran/50% 2045—50% UE657/
/60% 2045—40% UE657/Saran/60% 2045—40% UE657/
/70% 2045—30% UE657/Saran/70% 2045—30% UE657/
/40% 2035—60% UE657/Saran/40% 2035—60% UE657/
/40% 11P—60% UE657/Saran/40% 11P—60% UE657/
/40% 2045—60% UE657/Saran/100% 3638/
/40% 2045—60% UE657/Saran/100% 3121/
/40% 2045—60% UE657/Saran/100% UE657/
/20% 2045—80% 3121/Saran/20% 2045—80% 3121/
/20% 2045—80% 3124/Saran/20% 2045—80% 3124/
/40% 2045—50% 3134/Saran/40% 2045—80% 3134/
/60% 2045—40% 3165/Saran/60% 2045—40% 3165/
/60% 2045—40% UE643/Saran/60% 2045—40% UE643/
/70% 2045—30% 360/Saran/70% 2045—30% 360/

Thus it is seen that LLDPE may be blended with a large family of EVA polymers. The resulting films are susceptible to stretching by conventional processes, and the films are capable of surviving the stretching process intact.

A more complex form of the invention is an oriented 5-layer polymeric structure as shown in Figure 3. In this structure, layer 114 typically represents the barrrier layer. Layer 118 is the exterior layer and layer 120 is the interior, sealant layer. Layers 116 and 122 are LLDPE/EVA blend layers, which serve as compatibilizing layers between the layer 114 and the layers 118 and 120. Layers 116 and 122 may also provide, as can any of the layers, certain desirable structural and strength benefitting properties.

In typical structures, like polymeric compositions in layers 116 and 122 and also in layers 118 and 120 provide a chemical balance of properties centered physically about barrier layer 114. Thus layers 116 and 122, in their normal functions, may serve as chemical as well as physical bridges to layer 114. Since they are not subjected to the physical and chemical stress imposed on the sealant layer 120, and the outer layer 118, the composition and thickness of layers 116 and 122 may, in many cases, be selected for their desirable properties somewhat independently of those properties required of the external layers by external stress imposed directly on them. Thus layers 116 and 122 may be selected with substantial freedom to reinforce the film in functionally weaker areas.

Exemplary five layer films according to Fig. 3 are:
/EVA/EVA-LLDPE blend/Saran/EVA-LLDPE blend/EVA/
and
/EVA/LLDPE-Plexar blend/EVOH/LLDPE-Plexar blend/EVA/

These structures are balanced or symmetrical structures. Unbalanced structures are permissible according to the invention.

Thus, in an unbalanced structure also illustrated by Figure 3, layer 116 is the barrier layer (e.g. of Saran), layers 114 and 120 are EVA/LLDPE blends, layer 122 is LLDPE and layer 118 is EVA. The unbalanced structure can be displayed as follows:
/EVA-LLDPE blend/Saran/EVA-LLDPE blend/LLDPE/EVA/
Other 5-layer structures incorporate EVOH as the barrier layer.

## Claims

1. An oriented multiple layer polymeric film, consisting of a barrier layer and two blend layers composed of linear low density polyethylene (LLDPE) and ethylene vinyl acetate copolymer (EVA) disposed one to either side of the first layer, and the blend layers have the same composition which consists of 10% to less than 30% or more than 30% to 90% LLDPE and the balance is EVA, the percentages quoted being by weight.

2. An oriented multiple layer polymeric film, consisting of a barrier layer and two blend layers composed of LLDPE and EVA disposed one to either side of the barrier layer, and one blend layer consists of 10% to less than 30% or more than 30% to 90% LLDPE the balance being EVA, and the other blend layer consists of 10% to less than 20% or more than 20% to 90% LLDPE the balance being EVA, the percentages quoted being by weight.

3. An oriented film according to claim 1 or claim 2, wherein the blend layers comprise up to 40% by weight LLDPE and the EVA has a vinyl acetate content of 6 to 12 mole percent and a melt index of 0.3 to 0.9, while the LLDPE has a melt index of 0.5 to 1.5.

4. A film according to any of claims 1 to 3, which includes two further layers, the first of these being LLDPE laminated to one of the blend layers and the second of these being an EVA laminated to the LLDPE layer.

5. A film according to any of claims 1 to 3, which includes two further layers each comprising an EVA, the EVA layers each being laminated to a respective one of the blend layers.

6. An oriented multiple layer polymeric film, consisting of a first barrier layer having second and third layers each adhered to a respective one of the opposite surfaces of the first layer, and fourth and fifth layers respectively adhered to surfaces of the second and third layers not adhered to the first layer, the second and third layers each being a blend of LLDPE and EVA and each of the fourth and fifth layers being an EVA, the second and third layers having the same composition and being composed of 10 to less than 20% or more than 80 up to 90% LLDPE and the balance being EVA; the percentages quoted being by weight.

7. An oriented multiple layer polymeric film, consisting of a first barrier layer having a second and third layers each adhered to a respective one of the opposite surfaces of the first layer, and fourth and fifth layers respectively adhered to surfaces of the second and third layers not adhered to the first layer, the second and third layers each being a blend of LLDPE and EVA and each of the fourth and fifth layers being an EVA, the second and third layers having different compositions, one of these layers being composed of 10 to less than 20% or more than 80 up to 90% LLDPE, the balance being EVA, and the other of these layers being composed of more than 10 up to 90% LLDPE, the balance being EVA; the percentages quoted being by weight.

8. A film according to any of claims 1 to 7, characterised in that the said barrier layer is selected from vinyl chloride-vinylidene chloride copolymer, ethylene vinyl alcohol copolymer and polymeric blends containing ethylene vinyl alcohol copolymer.

9. An oriented film according to any of claims 1 to 8, characterised in that the overall composition of the film comprises 20% to 30% linear low density polyethylene.

10. A shrink bag made from an oriented film according to any of claims 1 to 9.

11. A shrink bag according to claim 10, which comprises an extruded tubular article having one end closed by a heat seal and the other end open for filling the bag, said other end being closeable after filling by heat sealing.

## Patentansprüche

1. Orientierte Mehrschicht-Polymerfolie, bestehend aus einer Sperrschicht und zwei aus linearem Polyethylen niederer Dichte (LLDPE) und einem Ethylenvinylacetat-Copolymeren (EVA) zusammengesetzten Mischungsschichten zu beiden Seiten der ersten Schicht, bei der die Mischungsschichten die gleiche Zusammensetzung besitzen, die aus 10% bis weniger als 30% oder mehr also 30% bis 90% LLDPE besteht, wobei der Ausgleich ein EVA ist und die angegebenen Prozentsätze Gewichtsprozente sind.

**EP 0 092 897 B1**

2. Orientierte Mehrschicht-Polymerfolie, bestehend aus einer Sperrschicht und zwei aus LLDPE und EVA zusammengesetzten Mischungsschichten beidseits der Sperrschicht, bei der eine Mischungsschicht aus 10% bis weniger als 30% oder mehr als 30% bis 90% LLDPE besteht und der Ausgleich ein EVA ist und die andere Mischungsschicht aus 10% bis weniger als 20% oder mehr als 20% bis 90% LLDPE besteht und der Ausgleich ein EVA ist, wobei die angegebenen Prozentsätze Gewichtsprozente sind.

3. Orientierte Folie nach Anspruch 1 oder Anspruch 2, bei der die Mischungsschichten bis zu 40 Gewichtsprozent LLDPE umfassen und das EVA einen Vinylacetatgehalt von 6 bis 12 Molprozent und einen Schmelzindex von 0,3 bis 0,9 besitzt, während das LLDPE einen Schmelzindex von 0,5 bis 1,5 besitzt.

4. Folie nach einem der Ansprüche 1 bis 3, die zwei weitere Schichten aufweist, wobei die erste von diesen mit einer der Mischungsschichten laminiertes LLDPE und die zweite von diesen ein mit der LLDPE-Schicht laminiertes EVA ist.

5. Folie nach einem der Ansprüche 1 bis 3, die zwei weitere, jeweils ein EVA umfassende Schichten aufweist, wobei die EVA-Schichten jeweils mit einer entsprechenden der Mischungsschichten laminiert ist.

6. Orientierte Mehrschicht-Polymerfolie, bestehend aus einer ersten Sperrschicht mit einer zweiten und einer dritten Schicht, die jeweils mit der entsprechenden der einander gegenüberliegenden Oberflächen der ersten Schicht verbunden sind, und mit einer vierten und einer fünften Schicht, die mit den jeweiligen Oberflächen der zweiten und der dritten Schicht verbunden sind, die nicht mit der ersten Schicht verbunden sind, wobei die zweite und die dritte Schicht jeweils eine Mischung aus LLDPE und EVA und die vierte und die fünfte Schicht jeweils ein EVA sind, die zweite und die dritte Schicht die gleiche Zusammensetzung besitzen und aus 10 bis weniger als 20% oder mehr als 80 bis 90% LLDPE zusammengesetzt sind, während der Ausgleich ein EVA ist, und die angegebenen Prozentsätze Gewichtsprozente sind.

7. Orientierte Mehrschicht-Polymerfolie, bestehend aus einer ersten Sperrschicht mit einer zweiten und einer dritten Schicht, die jeweils mit der entsprechenden der einander gegenüberliegenden Oberflächen der ersten Schicht verbunden sind, und mit einer vierten und einer fünften Schicht, die mit den jeweiligen Oberflächen der zweiten und der dritten Schicht verbunden sind, die nicht mit der ersten Schicht verbunden sind, wobei die zweite und die dritte Schicht jeweils eine Mischung aus LLDPE und EVA und die vierte und die fünfte Schicht jeweils ein EVA sind, die zweite und die dritte Schicht unterschiedliche Zusammensetzungen aufweisen, indem eine dieser Schichten aus 10 bis weniger als 20% oder mehr als 80 bis 90% LLDPE besteht, während der Ausgleich ein EVA ist, und die andere dieser Schichten aus mehr als 10 bis 90% LLDPE besteht, während der Ausgleich ein EVA ist, und die angegebenen Prozentsätze Gewichtsprozente sind.

8. Folie nach einem der Ansprüche 1 bis 7, dadurch gekennzeichnet, daß die Sperrschicht auch Vinylchlorid-Vinyledenchlorid-Copolymeren, Ethylenvinylalkoholcopolymeren und polymeren Mischungen ausgewählt ist, die ein Ethylenvinylalkoholcopolymeres enthalten.

9. Orientierte Folie nach einem der Ansprüche 1 bis 8, dadurch gekennzeichnet, daß die Gesamtzusammensetzung der Folie 20% bis 30% lineares Polyethylen niederer Dichte umfaßt.

10. Schrumpfbeutel, hergestellt aus einer orientierten Folie nach einem der Ansprüche 1 bis 9.

11. Schrumpfbeutel nach Anspruch 10, der aus einem extrudierten schlauchförmigen Artikel besteht, dessen eines Ende durch eine Heißversiegelung geschlossen und dessen anderes Ende zum Füllen des Beutels offen ist, wobei dieses andere Ende nach dem Füllen durch Heißversiegelung verschließbar ist.

**Revendications**

1. Film étiré de polymère à couches multiples, se composant d'une couche barrière et de deux couches mixtes composées de polyéthylène linéaire basse densité (LLDPE) et de coplymère éthylène/acétate de vinyle (EVA), disposées de part et d'autre de la couche barrière, les couches mixtes ayant la même composition faite de 10% à moins de 30% ou de plus de 30% à 90% de LLDPE et, pour le reste, d'EVA, les pourcentages spécifiés étant en poids.

2. Film étiré de polymère à couches multiples, se composant d'une couche barrière et de deux couches mixtes composées de LLDPE et d'EVA, disposées de part et d'autre de la couche barrière, l'une des couches mixtes étant composée de 10% à moins de 30% ou de plus de 30% à 90% de LLDPE et, pour le reste, d'EVA et l'autre couche mixte étant composée de 10% à moins de 20% ou de plus de 20% à 90% de LLDPE et, pour la reste, d'EVA, les pourcentages spécifiés étant en poids.

3. Film étiré selon la revendication 1 ou 2, dans lequel les couches mixtes comprennent jusqua'à 40% en poids de LLDPE et l'EVA a une teneur en acétate de vinyle de 6 à 12% en moles et un indice de fusion de 0,3 à 0,9, tandis que le LLDPE a un indice de fusion de 0,5 à 1,5.

4. Film selon l'une quelconque des revendications 1 à 3, comprenant deux autres couches, la première de celles-ci étant faite de LLDPE contre-collé sur l'une des couches mixtes et la seconde étant faite d'un EVA contrecollé sur la couche de LLDPE.

5. Film selon l'une quelconque des revendications 1 à 3, comprenant deux autres couches faites l'une et l'autre d'un EVA, les couches d'EVA étant contre-collées chacune sur une couche mixte respective.

6. Film étiré de polymère à couches multiples, se composant d'une première couche barrière aux surfaces opposées de laquelle adhèrant respectivement une deuxième et une troisième couches, et d'une quatrième et d'une cinquième couches adhérant respetivement aux surfaces de la deuxieme et de la

8

EP 0 092 897 B1

troisième couches qui n'adhérent pas à la première couche, la deuxième et la troisième couches étant faites chacune d'un mélange de LLDPE et d'EVA et chacune des quatrième et cinquième couches étant faite d'un EVA, les deuxiéme et troisième couches ayant la même composition et étant composées de 10 à moins de 20% ou de plus de 80% jusqu'à 90% de LLDPE et, pour le reste, d'EVA les pourcentages spécifiés étant en poids.

7. Film étiré de polymère à couches multiples, se composant d'une première couche barrière aux surfaces opposées de laquelle adhérant respectivement une deuxième et une troisième couches, et d'une quatrième et d'une cinquième couches adhérant respectivement aux surfaces de la deuxième et de la troisième couches qui n'adhérent pas à la première couche, la deuxième et la troisième couches étant faites chacune d'un mélange de LLDPE et d'EVA et chacune des quatrième et cinquième couches étant faite d'un EVA, les deuxième et troisième couches ayant des compositions différentes, l'une de ces couches étant composée de 10% à moins de 20% ou de plus de 80% jusqu'à 90% de LLDPE et, pour le reste, d'EVA, et l'autre de ces couches étant composée de plus de 10% jusqu'à 90% de LLDPE et, pour le reste, d'EVA, les pourcentages spécifiés étant en poids.

8. Film selon l'une quelconque des revendications 1 à 7, caractérisé en ce que ladite couche barrière est en une matière choisie entre des copolymères chlorure de vinyle/chlorure de vinylidène, des copolymères éthylène/alcool vinylique et des mélanges de polymères contenant un copolymère éthylène/alcool vinylique.

9. Film étiré selon l'une quelconque des revendications 1 à 8, caractérisé en ce que la composition totale du film comprend de 20% à 30% de polyéthylène linéaire basse densité.

10. Sac rétractable, fait d'un film étiré selon l'une quelconque des revendications 1 à 9.

11. Sac rétractable selon la revendication 10, consistant en un article tubulaire extrudé dont l'une des extrémités est fermée par une thermosoudure et dont l'autre extrémité est ouverte pour permettre le remplissage du sac, cette autre extrémité pouvant être fermée par thermosoudage après le remplissage.

9

FIG. 1

FIG. 2

FIG. 3